# EUROPEAN PATENT APPLICATION

(11) **EP 3 040 863 A1**
(43) Date of publication of application: **06.07.2016**
(21) Application number: 15200427.1
(22) Date of filing: 16.12.2015
(51) Int. Cl.: G06F 11/07, G05B 23/02

(54) **METHOD OF IDENTIFYING FAULTS IN AN AIRCRAFT**

(30) Priority: 01.01.2015 US 201514588454
(71) Applicant: GE Aviation Systems LLC, Grand Rapids, MI 49512-1991 (US)
(72) Inventor: PEREIRA, Frazer Leslie, Cheltenham, Gloucestershire GL52 8SF (GB)
(74) Representative: Williams, Andrew Richard

(57) **Abstract**

A method (100) of identifying likely faults in an aircraft (10) includes retrieving (102) a first set of data (106) from the aircraft, establishing a list of potential faults (104) based on analysis of the obtained first set of data, ranking the members of the list (108) of potential faults and pruning the list (114) based upon at least one additional set of data. Members are pruned until a predetermined criterion is met.

## Description

### BACKGROUND

Contemporary aircraft may include a variety of avionics systems to assist in flying the aircraft. Such systems may collect various aircraft data and such data may indicate any irregularities or other signs of a fault or problem with the aircraft. Such data may be off-loaded from the aircraft and analyzed to determine what occurred on the aircraft.

### BRIEF DESCRIPTION

In one aspect, a method of identifying likely faults in an aircraft is provided. The method includes retrieving a first set of data from the aircraft, establishing a list based on analysis of the obtained first set of data, ranking the members of the list of potential faults and pruning the list based upon at least one additional set of data. Members are pruned until a predetermined criterion is met.

### BRIEF DESCRIPTION OF THE DRAWINGS

In the drawings:
Figure 1 is a perspective view of an aircraft during a maintenance procedure in which embodiments of the invention may be implemented.
Figure 2 is a flowchart showing a method of identifying potential faults to determine if a fault has occurred according to an embodiment of the invention.
Figure 3 is a flowchart showing a method of identifying potential faults to prognosticate the occurrence of a fault according to an embodiment of the invention.

### DETAILED DESCRIPTION

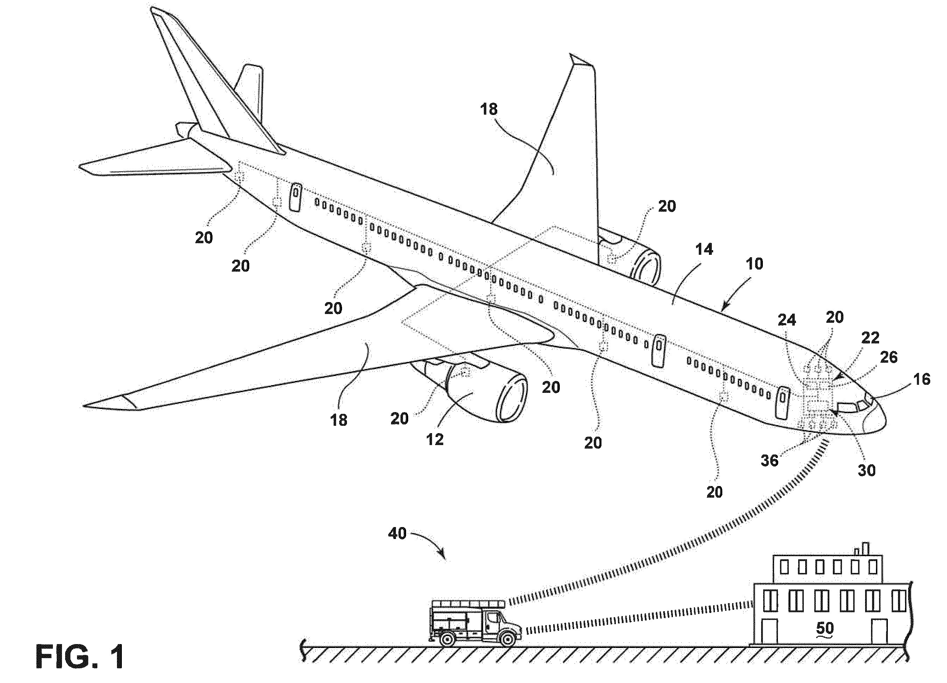

Figure 1 schematically depicts an exemplary aircraft 10 during a maintenance operation that may execute embodiments of the invention. The aircraft 10 may include one or more propulsion engines 12, a fuselage 14 with a cockpit 16 positioned in the fuselage 14, and the one or more propulsion engines 12 coupled to the fuselage 14 directly or, as shown, by way of wing assemblies 18 extending outward from the fuselage 14. While a commercial aircraft has been illustrated, it is contemplated that embodiments of the invention may be used in any type of aircraft, including, without limitation, fixed-wing, rotating-wing, rocket, personal aircraft, etc.

A plurality of aircraft systems 20 that enable proper operation of the aircraft 10 may also be included in the aircraft 10 as well as one or more computers or controllers 22, which may be operably coupled to the plurality of aircraft systems 20 to control their operation. While only a single controller 22 has been illustrated, it is contemplated that any number of controllers 22 may be included in the aircraft 10. In such an instance, the controller 22 may also be connected with other controllers of the aircraft 10. The controller 22 may include or be associated with any suitable number of individual microprocessors, power supplies, storage devices, interface cards, auto flight systems, flight management computers, and other standard components. For example, the controller 22 may include memory 24, the memory 24 may include random access memory (RAM), read-only memory (ROM), flash memory, or one or more different types of portable electronic memory, such as discs, DVDs, CD-ROMs, etc., or any suitable combination of these types of memory. The controller 22 may also include one or more processors 26, which may be running any suitable programs. The controller 22 may include or cooperate with any number of software programs or instructions designed to carry out the various methods, process tasks, calculations, and control/display functions necessary for operation of the aircraft 10. The controller 22 is illustrated as being in communication with the plurality of aircraft systems 20 and it is contemplated that the controller 22 may aid in operating the aircraft systems 20 and may receive information from the aircraft systems 20. The controller 22 may be a portion of a flight management system (FMS), health monitoring system (HMS), etc.

Further, a health management unit 30 has been illustrated as being included within the aircraft 10. The health management unit 30 may also be operably coupled to any number of the plurality of aircraft systems and/or controllers to receive information therefrom. While illustrated as being included in the controller 22, the health management unit 30 may also be separate from the controller 22 or may be a part of any of the avionics systems that have access to off-board interfaces like an integrated modular avionics, onboard maintenance system, flight data recorder, etc. The health management unit 30 may collect or receive information, determine a critical failure or potential catastrophic event, assemble data that may not normally be collected, and transmit such data.

The health management unit 30 may be implemented in any suitable software or hardware. For example, the health management unit 30 might include a general-purpose computing device in the form of a computer, including a processing unit, a system memory, and a system bus, that couples various system components including the system memory to the processing unit. The computer may be configured to determine a potential catastrophic event during the flight of the aircraft, assemble data indicative of a report of the aircraft state of operation upon the determining of a potential catastrophic event and controls transmission of the assembled data from the aircraft during the flight of the aircraft. The computer may also prepare a predefined report from the assembled data and transmit it. The computer may retrieve data from the aircraft and off-board data interfaces for the predefined report indicating the aircraft state of operation.

The health management unit 30 may include all or a portion of one or more computer programs having executable instruction sets for reporting critical failure information of the aircraft 10 and transmitting information from the aircraft 10. The program may include a computer program product that may include machine-readable media for carrying or having machine-executable instructions or data structures stored thereon. Such machine-readable media may be any available media, which can be accessed by a general purpose or special purpose computer or other machine with a processor. Generally, such a computer program may include routines, programs, objects, components, data structures, algorithms, etc. that have the technical effect of performing particular tasks or implementing particular abstract data types. Machine-executable instructions, associated data structures, and programs represent examples of program code for executing the exchange of information as disclosed herein. Machine-executable instructions may include, for example, instructions and data, which cause a general-purpose computer, special purpose computer, or special-purpose processing machine to perform a certain function or group of functions.

The controller 22 and/or the health management unit 30 may be communicably coupled to one or more communication links 36 to transfer data to and from the aircraft 10. Alternatively, the computer of the health management unit 30 may include a communication management module configured to determine what one or more of the communication links 36 to use in transferring the data based on bandwidth, availability, or current utilization. It is contemplated that the communication links 36 may be wireless communication links and may be any variety of communication mechanism capable of wirelessly linking with other systems and devices and may include, but is not limited to, packet radio, satellite uplink, Wireless Fidelity (WiFi), WiMax, Bluetooth, ZigBee, 3G wireless signal, code division multiple access (CDMA) wireless signal, global system for mobile communication (GSM), 4G wireless signal, long term evolution (LTE) signal, Ethernet, or any combinations thereof. It will also be understood that the particular type or mode of wireless communication is not critical to embodiments of the invention, and later-developed wireless networks are certainly contemplated as within the scope of embodiments of the invention. Further, the communication links 36 may include one or more radios including voice, ACARS-analog, ACARS-digital, SATCOM, cellular, etc. The communication links 36 may allow for communication with maintenance personnel via, for example a maintenance vehicle 40, ground controllers or airlines operations center 50 at a ground-based station or with non-ground stations such as satellite (not shown). Further, while data communicated to an airline operations center 50 via a maintenance vehicle 40 has been illustrated, it will be understood that the aircraft 10 may communicate directly with an airline operations center 50 utilizing the communication links 36.

During operation, the health management unit 30 may utilize and collect inputs from the plurality of aircraft systems 20. By way of non-limiting example, the health management unit 30 may be preconfigured to recognize key events that are considered potentially indicative of a system fault or defect. As the health management unit 30 monitors the aircraft 10 and its systems 20, the health management unit 30 may begin to establish connections to any number of on-board systems 20 including by way of non-limiting examples a health management system and a navigation system and off-board data through communication links 36 and assemble data related to operational data, location data, and critical data related to the aircraft 10. For example, the health management unit 30 may assemble a preconfigured summary report of the aircraft state, position, and nature of a fault or defect or store raw data from the multiple systems 20 on-board. The health management unit 30 may then store the assembled or raw data and control the transmission of the data over the communication links 36 for receipt by the airline operations center 50 at a subsequent maintenance operation.

At the airline operations center 50, a computing system (termed "a processor") processes the data transmitted by the aircraft 10 over the communications link 36 to identify faults or defects in the aircraft, likely causes of said faults or defects and direct further maintenance activities to either identify or rectify the identified issues. The processor may require relatively large amounts of computing power and time and may be performed during a maintenance operation or across multiple flights and maintenance operations.

It will be understood that details of environments that may implement embodiments of the invention are set forth in order to provide a thorough understanding of the technology described herein. It will be evident to one skilled in the art, however, that the exemplary embodiments may be practiced without these specific details. The exemplary embodiments are described with reference to the drawings. These drawings illustrate certain details of specific embodiments that implement a module or method, or computer program product described herein. However, the drawings should not be construed as imposing any limitations that may be present in the drawings. The method and computer program product may be provided on any machine-readable media for accomplishing their operations. The embodiments may be implemented using an existing computer processor, or by a special purpose computer processor incorporated for this or another purpose, or by a hardwired system.

As noted above, embodiments described herein may include a computer program product comprising machine-readable media for carrying or having machine-executable instructions or data structures stored thereon. Such machine-readable media may be any available media, which may be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium that can be used to carry or store desired program code in the form of machine-executable instructions or data structures and that can be accessed by a general purpose or special purpose computer or other machine with a processor. When information is transferred or provided over a network or another communication connection (either hardwired, wireless, or a combination of hardwired or wireless) to a machine, the machine properly views the connection as a machine-readable medium. Thus, any such a connection is properly termed a machine-readable medium. Combinations of the above are also included within the scope of machine-readable media. Machine-executable instructions comprise, for example, instructions and data, which cause a general-purpose computer, special purpose computer, or special purpose processing machines to perform a certain function or group of functions.

Embodiments will be described in the general context of method steps that may be implemented in one embodiment by a program product including machine-executable instructions, such as program codes, for example, in the form of program modules executed by machines in networked environments. Generally, program modules include routines, programs, objects, components, data structures, etc. that have the technical effect of performing particular tasks or implement particular abstract data types. Machine-executable instructions, associated data structures, and program modules represent examples of program codes for executing steps of the method disclosed herein. The particular sequence of such executable instructions or associated data structures represent examples of corresponding acts for implementing the functions described in such steps.

Embodiments may be practiced in a networked environment using logical connections to one or more remote computers having processors. Logical connections may include a local area network (LAN) and a wide area network (WAN) that are presented here by way of example and not limitation. Such networking environments are commonplace in office-wide or enterprise-wide computer networks, intranets and the internet and may use a wide variety of different communication protocols. Those skilled in the art will appreciate that such network computing environments will typically encompass many types of computer system configurations, including personal computers, hand-held devices, multiprocessor systems, microprocessor-based or programmable consumer electronics, network PCs, minicomputers, mainframe computers, and the like.

Embodiments may also be practiced in distributed computing environments where tasks are performed by local and remote processing devices that are linked (either by hardwired links, wireless links, or by a combination of hardwired or wireless links) through a communication network. In a distributed computing environment, program modules may be located in both local and remote memory storage devices.

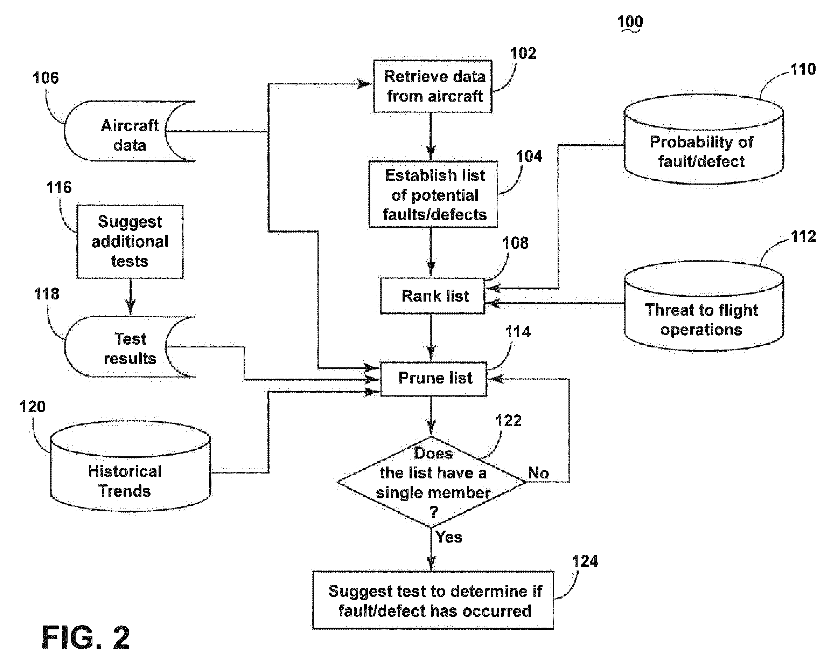

In accordance with an embodiment of the invention, Figure 2 illustrates a method 100, which may be used for identifying likely faults in an aircraft. The method 100 begins at 102 where the processor retrieves a first set of data collected by the aircraft 106. The first set of data may include data generated from at least one system 20 in the aircraft 10 and stored on-board during a flight operation. It is also contemplated that the first set of data may include aggregating data from multiple systems 20 of the aircraft 10. More specifically, the following are a few non-limiting examples of cases where data indicative of a likely fault or defect may be collected and stored which may result in the assembling of a fault report or the storing of raw data. An aircraft stall may result in on-board systems generating data related to the event, which may be determined by detection of a stall, the dataset including data related to a decrease in airspeed at altitude, data related to engine pressure variation as the engine decreases to idle, data related to descent rate of the aircraft, data indicating that both engines flamed out, data related to the airspeed of the aircraft that is below a predetermined indicated air speed, etc. Other relevant data that may be stored in the first data set may include telemetry data related to the aircraft's altitude above ground level, proximity to planned approach location, etc. That the plane is running on emergency power may cause an on-board system to generate data indicative that only the battery bus is available. Data relating to a loss of fuel may include data indicative of an aircraft engine's status.

Upon the retrieval of a first set of data from the aircraft at 102, the processor establishes a list of potential faults based on an analysis of the first set of data at 104. That is, analysis of the initial data establishes a list of faults or defects which may have occurred on-board the aircraft. The processor assembles the list at the airline operations center 50 from the data retrieved from the systems of the aircraft 10. Computational systems integrated with the processor deployed for aircraft diagnostics may establish the list of potential faults or defects from the retrieved aircraft system data. The members of the list are indicative of the most likely faults or defects on the aircraft based on the first set of data. Systems for performing such aircraft diagnostics based on a data set retrieved from an aircraft's systems include, for example, Probabilistic Diagnostic and Prognostic System (ProDaPS). ProDaPS assesses engine sensor signals, mechanical and performance diagnostics as well as component prognostics to provide a probabilistic assessment of engine performance and mechanical faults. Diagnostic and prognostic techniques for establishing the list may include advanced stochastic map (i.e. random field) models used for pattern recognition, Bayesian belief analysis for updating statistical information from models/measurements, the Karhunen-Loeve (KL) expansion as a stochastic fault classifier, etc.

At 108, the processor ranks members of the list of potential faults. The ranking may include weighting the member of the list based on a probability of occurrence of a fault and a threat that a potential fault poses to flight operations of the aircraft. That is, the processor assigns values to the members of the initial list based on one or more criteria that may preferably include both the likelihood of occurrence of a particular fault and the threat to flight operations posed by a particular fault. The processor includes access to data that feeds the ranking operation and includes one or more databases that store data related to the weighting criteria, for example, a database of the probability of fault occurrence 110 and a database of cataloging the threat level assessment of a fault for flight operations 112.

Where multiple weighting criteria exist, the processor includes steps to roll up the values into a single value for use in ranking the members of the list. For example, if the established list includes two members, *A* and *B* and the ranking criteria include the probability of occurrence and the threat to flight operations, the ranking of members *A* and *B* may result as the product of the two criteria. If member *A* has a probability of fault of 0.9 and a threat to flight operations of 0.1 and member *B* has a probability of fault of 0.2 and a threat to flight operations of 0.9 then member *B* with a weighting of 0.2 x 0.9 = 0.18 is ranked higher than member *A* with a weighting of 0.9 x 0.1 = 0.09. That is, the processor ranks member *B* higher than member *A* primarily because of the criticality of the potential fault to the flight operation of the aircraft.

Upon rank ordering the list, the processor prunes the list based upon at least one additional set of data at 114. Additional sets of data may include data indicative of historical trends 120 of the aircraft or a set of data retrieved from the aircraft 106 that was recorded by the aircraft after the first set of data was retrieved during subsequent flight operations. Other data sets may result from suggesting the performance of a maintenance test on the aircraft. That is, the processor may suggest a test procedure to a maintenance operator that is determined by analysis of the established list. In this way as a part of the pruning step, the processor includes case-based reasoning which is the process of solving current problems based on the solutions of similar past problems. More specifically, the incorporation of historical trend data 120 with current and historical aircraft data 106 to diagnose or prognosticate likely faults or defects based on previous cases is a case-based reasoning approach to analyzing aircraft system data. Consequently, techniques known for case-based reasoning may apply in the analysis and include the four-step process of case-based computer reasoning of retrieval, reuse, revision and retention.

The processor prunes the list until a predetermined criterion is met at which point the pruned list includes the most likely faults in the aircraft. When diagnosing a fault, the criterion may be the number of members of the list. Preferably, that number is one indicating that the list contains a single member that is considered the most credible fault or defect. That is, the processor may include a step to determine if the list contains a single member at 122. If not, the pruning process at 114 repeats until there is only the most likely fault left on the list.

Once the predetermined criterion is met, the processor may suggest a maintenance test to determine if the fault or defect has actually occurred at 124. It is contemplated that the list or the data may be assembled in any suitable manner including that a preconfigured summary report may be prepared and transmitted that is indicative of the pruned list.

It will be understood that the method 100 of identifying likely faults in an aircraft is flexible and the method 100 illustrated is merely for illustrative purposes. For example, the sequence of steps depicted is for illustrative purposes only, and is not meant to limit the method 100 in any way, as it is understood that the steps may proceed in a different logical order or additional or intervening steps may be included without detracting from embodiments of the invention.

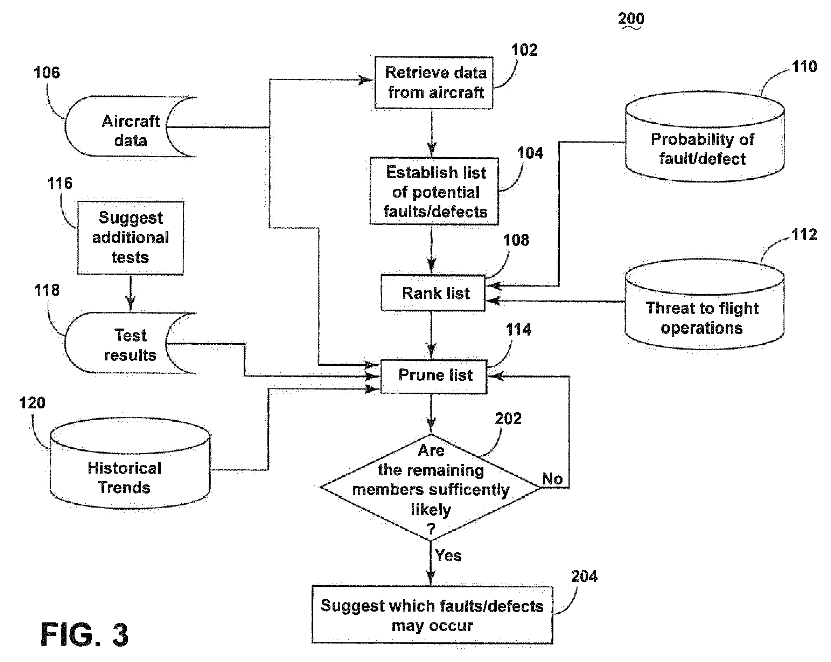

Further, Figure 3 illustrates a diagram that may further aid in the understanding of embodiments of the invention. More specifically, it is illustrated in the diagram that the method 200 may include identifying potential faults to prognosticate the occurrence of a fault. In the embodiment, the processor initially performs the same steps presented in FIG. 2 but engages a different predetermined criterion. That is, the processor may include a step 202 to determine if the remaining members of the pruned list are sufficiently likely to cause a fault or defect. In this way, the predetermined criterion is a likelihood that is associated with each member of the list. If the processor determines that each member is not sufficiently likely to cause a fault or defect, the pruning process at 114 repeats until the list only contains sufficiently likely faults or defects.

Once the predetermined criterion is met, the processor may suggest which faults or defects are most likely to occur at step 204. It is contemplated that the list or the data may be assembled in any suitable manner including that a preconfigured summary report may be prepared and transmitted that is indicative of a prognosis of a fault or faults most likely to occur.

The above-described embodiments diagnose and prognosticate potential faults based, in part, on a case-based reasoning approach to analyzing on-board aircraft data. Further, the above-described embodiments when the data indicates a potential fault or defect direct maintenance personnel to perform bespoke tests designed to confirm or rule out the most likely or most important potential faults.

Beneficial effects of the above-described embodiments include faster decision support as the method reduces the scope of the data necessary to be searched in one or more databases. The inclusion of recommended tests by the diagnosing system assists in determining relevant information for fault diagnosis. The above embodiments may also provide additional benefits including a reduction in both computing time and processing power (and associated costs) for early detection of a systemic problem.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method (100) of identifying likely faults in an aircraft (10), the method **characterized by**:
retrieving(102) a first set of data (106) from the aircraft (10);
establishing a list of potential faults (104) based on an analysis of the first set of data;
ranking members of the list (108) of potential faults; and
pruning the list (114) based upon at least one additional set of data until a predetermined criterion is met, wherein the pruned list comprises the most likely faults in the aircraft.

2. The method of claim 1, wherein the ranking of the list (108) step includes weighting the members based on a probability of occurrence of a fault (110) and a threat that a potential fault poses to flight operations (112) of the aircraft.

3. The method of either of claim 1 or 2, wherein the at least one additional set of data includes one of data indicative of historical trends (120) of the aircraft, or a set of data retrieved from the aircraft that was recorded by the aircraft (10) after the first set of data (106) was retrieved.

4. The method of any preceding claim, wherein the pruning step includes case-based reasoning.

5. The method of any preceding claim, further including a step of suggesting the performance of a maintenance test (116) on the aircraft (10) wherein the test procedure is determined by analysis of the established list.

6. The method of claim 5, wherein the at least one additional set of data includes data resulting from performance of the maintenance test (118).

7. The method of any preceding claim, further including a step of transmitting a report indicative of the pruned list.

8. The method of claim 7, wherein the transmitted report includes a suggested maintenance test to determine if a fault indicated by the pruned list has occurred.

9. The method of either of claims 7 or 8, wherein the transmitted report includes a prognosis of an occurrence of a fault indicated by the pruned list.

10. The method of any preceding claim, wherein the predetermined criterion is the number of members of the list after the step of pruning is complete.

11. The method of claim 10, wherein the number is one.

12. The method of any of claims 1 to 9, wherein the predetermined criterion is a likelihood associated with each member of the list.
